(19) Europäisches Patentamt / European Patent Office / Office européen des brevets

(11) **EP 3 926 809 A1**

(12) **DEMANDE DE BREVET EUROPEEN**

(43) Date de publication:
**22.12.2021 Bulletin 2021/51**

(21) Numéro de dépôt: **21177462.5**

(22) Date de dépôt: **02.06.2021**

(51) Int Cl.:
*H02M 3/335* *(2006.01)*　　*H02M 3/337* *(2006.01)*
*H02M 1/00* *(2006.01)*　　*H02M 3/00* *(2006.01)*
*H02M 3/158* *(2006.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **15.06.2020 FR 2006217**

(71) Demandeur: **3D Plus**
**78530 Buc Cedex (FR)**

(72) Inventeur: **COLONNA, Cédric**
**92220 Bagneux (FR)**

(74) Mandataire: **Marks & Clerk France**
**Immeuble "Visium"**
**22, avenue Aristide Briand**
**94117 Arcueil Cedex (FR)**

(54) **CONVERTISSEUR DE PUISSANCE RESONANT**

(57) L'invention concerne un convertisseur de puissance (100) à circuit résonant parallèle comportant un onduleur (101), un circuit résonant (LC), un transformateur (T1) comprenant un circuit primaire (2) et un circuit secondaire (3), des moyens de contrôle (4) de l'onduleur (101), l'onduleur (101) étant relié au circuit résonant (LC) qui est destiné à être connecté à une charge de sortie (Rout) à travers le transformateur (T1), ledit convertisseur de puissance étant caractérisé en ce que l'onduleur (101) comprend un premier demi-pont (D1) et un second demi-pont (D2) en parallèle du premier demi-pont (D1), une première inductance (Lc1) entre le premier demi-pont (D1) et le circuit résonant (LC), une deuxième inductance (Lc2) entre le second demi-pont (D2) et le circuit résonant (LC), et en ce que les première et deuxième inductances (Lc1, Lc2) ont la même inductance et sont couplées en sens inverse l'une par rapport à l'autre.

[Fig. 4]

EP 3 926 809 A1

**Description**

Le domaine de l'invention est celui des convertisseurs de puissance résonants. La conversion de tension continue est utilisée dans de nombreux domaines technologiques allant de la nécessité à convertir la tension d'alimentation de dispositifs, tel que la conversion de la tension délivrée par une batterie d'ordinateur portable vers un processeur; à des applications évoluant dans des environnements beaucoup plus critiques tel que celui du spatial. L'invention trouve une utilité particulière dans le domaine du spatial mais peut être employée dans d'autres domaines qui demandent une flexibilité sur les charges à alimenter ou sur la tension d'entrée, notamment celui de l'automobile.

De manière générale, la fonction d'un convertisseur de puissance en sa sortie est de fournir à la cible la tension et le courant nécessaire à son fonctionnement.

Les convertisseurs à résonance sont conçus pour une plage de tension d'entrée et de courant de sortie données. Dans une structure résonante classique, le fonctionnement est assuré à la fréquence de résonance ou pour une fréquence proche. Dans ces conditions et pour une sélectivité suffisamment grande, le courant dans la structure est de forme sinusoïdale ou quasi-sinusoïdale.

La variation de la tension d'entrée ou de la charge se fait souvent par une modification de la fréquence de fonctionnement de l'alimentation d'un convertisseur à résonance. Or la modification de la fréquence de fonctionnement affecte le rapport entre la puissance active et réactive et ne permet pas d'optimiser le rendement sur toute la plage de fonctionnement des convertisseurs à résonance.

La modification de la fréquence de fonctionnement de l'alimentation d'un convertisseur à résonance rend également difficile le dimensionnement des éléments magnétiques et des filtres autour du convertisseur de puissance résonant.

De plus, pour des plages de fonctionnement très étendues, il devient difficile d'assurer un fonctionnement efficient dans tous les cas d'utilisation.

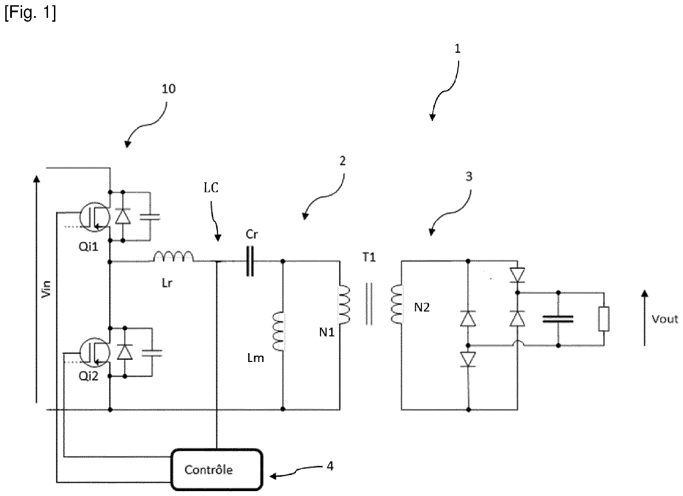

La figure 1 représente une structure connue de l'art antérieur. Classiquement, un convertisseur de puissance 1 résonant comporte :

- un onduleur 10 assuré par deux interrupteurs Qi1 et Qi2,

- un circuit résonant LC série avec une inductance Lr et un condensateur Cr,

- un transformateur T1 comprenant un circuit primaire 2 avec un enroulement de N1 spires et un circuit redresseur secondaire 3 avec un enroulement de N2 spires, qui permet de réaliser la fonction isolation galvanique,

- et des moyens 4 de contrôle de l'onduleur 10.

L'onduleur 10 permet ici de hacher une tension d'entrée *Vin* (continue) et ainsi de générer un signal carré. Si ce signal carré est à la bonne fréquence, i.e. à la fréquence de résonance ou à une fréquence proche de la fréquence de résonnance du couple Lr, Cr, le courant peut être considéré purement sinusoïdal pour une sélectivité suffisamment grande. Le courant passe alors par le transformateur T1 qui permet l'isolation galvanique et est transmis à une charge de sortie Rout par l'intermédiaire du circuit redresseur secondaire 3.

L'ajout d'une inductance Lm en parallèle du transformateur T1, comme représenté en figure 1, permet de dissocier deux résonances. Le fait de travailler entre ces deux résonances par modification de la fréquence rend possible la variation de charge de sortie Rout et l'adaptation aux variations de tensions d'entrée et de sortie.

Plus l'écart entre ces charges est grand, plus l'écart entre les gains requis est grand, et plus il est nécessaire de modifier la fréquence pour balayer la plage de tension de sortie Vout souhaitée. Ceci présente quatre inconvénients. Le premier inconvénient se retrouve au niveau des éléments magnétiques, c'est-à-dire au niveau des inductances et du transformateur, qui sont dimensionnés pour une fréquence de fonctionnement précise et qui peuvent occasionner des pertes dans le cas de fréquences de fonctionnement éloignées de leur zone de fonctionnement.

Le second inconvénient se retrouve au niveau de la dynamique. Balayer une grande plage de fréquence implique une réduction de la dynamique du système.

Une augmentation de la puissance réactive dans la cellule peut entrainer une augmentation des courants (échange d'énergie entre le convertisseur et la source) et donc une augmentation des pertes.

Enfin, modifier la fréquence de fonctionnement peut entrainer des discontinuités sur le courant de sortie, augmentant la valeur du courant transmis au secondaire et augmentant donc les pertes.

L'invention vise à pallier tout ou partie des problèmes cités plus haut en proposant une structure innovante de convertisseur de puissance résonant série parallèle capable d'étendre son utilisation sur une plage de fonctionnement plus large tout en garantissant de bonnes performances. L'invention permet ainsi de disposer d'un convertisseur de puissance résonant pouvant fonctionner pour toutes les charges et présentant une dynamique élevée.

A cet effet, l'invention a pour objet un convertisseur de puissance à circuit résonant parallèle comportant :

- un onduleur,

- un circuit résonant,

- un transformateur comprenant un circuit primaire et un circuit secondaire,

- des moyens de contrôle de l'onduleur, l'onduleur étant relié au circuit résonant qui est destiné à être connecté à une charge de sortie à travers le transformateur, caractérisé en ce que l'onduleur comprend :

- un premier demi-pont et un second demi-pont en parallèle du premier demi-pont,

- une première inductance entre le premier demi-pont et le circuit résonant,

- une deuxième inductance entre le second demi-pont et le circuit résonant, et en ce que les première et deuxième inductances ont la même inductance et sont couplées en sens inverse l'une par rapport à l'autre.

Selon un aspect de l'invention, le second demi-pont est en opposition de phase du premier demi-pont pour un fonctionnement à faible charge.

Selon un aspect de l'invention, un courant $Ic$ traversant les première et deuxième inductances est tel que :

$$I_C = \frac{V_{in}}{8L_C f_{dec}}$$

Où $Vin$ est la tension d'entrée aux bornes du premier demi-pont et du second demi-pont, $Lc$ est l'inductance des première et deuxième inductances et $fdec$ est une fréquence de découpage du circuit résonant, pour un fonctionnement à faible charge.

Selon un aspect de l'invention, le premier demi-pont comprend un premier interrupteur et un deuxième interrupteur, le second demi-pont comprend un troisième interrupteur et un quatrième interrupteur, le premier demi-pont et le second demi-pont étant configurés pour être traversés par un courant et générant une tension et les moyens de contrôle du premier demi-pont et du second demi-pont sont configurés pour retarder le courant par rapport à la tension, de manière à obtenir une commutation douce.

Selon un aspect de l'invention, un temps mort $tm$ défini comme le temps de décharge des premier condensateur de capacité C1, deuxième condensateur de capacité C2, troisième condensateur de capacité C3, quatrième condensateur de capacité C4 et de ré-enclenchement des premier interrupteur, deuxième interrupteur, troisième interrupteur et quatrième interrupteur est tel que :

$$t_m = 16L_C C_{OSS} f_{dec}$$

Où $Coss$ est la capacité de sortie des premier, deuxième, troisième et quatrième interrupteurs.

Selon un aspect de l'invention, le circuit résonant est un circuit LC.

Selon un aspect de l'invention, le circuit résonant est un circuit LLC.

Selon un aspect de l'invention, le second demi-pont est en phase du premier demi-pont pour un fonctionnement à pleine charge.

L'invention sera mieux comprise et d'autres avantages apparaîtront à la lecture de la description détaillée d'un mode de réalisation donné à titre d'exemple, description illustrée par le dessin joint dans lequel :

[Fig.1] La figure 1 représente schématiquement une structure connue de l'art antérieur ;

[Fig.2] La figure 2 représente schématiquement une structure de convertisseur de puissance selon l'invention ;

[Fig.3] La figure 3 représente schématiquement l'onduleur de la structure du convertisseur de puissance selon l'invention ;

[Fig.4] La figure 4 représente schématiquement une variante de la structure de convertisseur de puissance ;

[Fig.5] La figure 5 représente schématiquement une autre variante de la structure de convertisseur de puissance.

Par souci de clarté, les mêmes éléments porteront les mêmes repères dans les différentes figures.

Dans la présente description, le terme « en parallèle » signifie que les éléments n'appartenant pas à la même branche sont groupés par leur extrémité de même polarité et travaillent en même temps. Le terme « en série » signifie que les éléments appartiennent à une même branche de courant et travaillent successivement. Le terme « en antiparallèle » signifie que les éléments sont orientés parallèlement l'un à l'autre, mais parcourus par un courant dans le sens opposé.

La figure 1, qui a été présentée précédemment, représente classiquement une structure de convertisseur de puissance 1 connue de l'état de l'art.

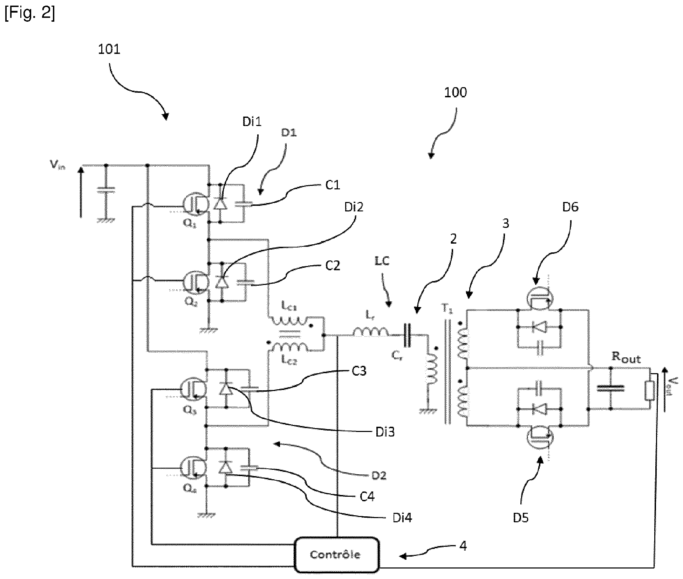

La figure 2 représente schématiquement une structure d'un convertisseur de puissance 100 selon l'invention. Comme dans l'état de l'art, le convertisseur de puissance 100 comporte :

- un onduleur 101 capable de hacher une tension d'entrée Vin et ainsi de générer un signal carré,

- un circuit résonant LC série avec une inductance Lr et un condensateur Cr relié à l'onduleur 101,

- un transformateur T1 comprenant un circuit primaire 2 avec un enroulement de N1 spires et un circuit redresseur secondaire 3 avec un enroulement de N2 et N3 spires, qui permet de réaliser la fonction isolation galvanique,

- et des moyens 4 de contrôle de l'onduleur 101.

A la différence de l'état de l'art, l'onduleur 101 est assuré par quatre interrupteurs Q1, Q2, Q3 et Q4. Les interrupteurs Q1 et Q2 forment un premier demi-pont D1 et les interrupteurs Q3 et Q4 forment un second demi-pont D2. Le premier demi-pont D1 est en parallèle du second demi-pont D2. Une première inductance Lc1 est positionnée en série du premier demi-pont D1 et relie le premier demi pont D1 et le circuit résonant LC. Une deuxième inductance Lc2 est positionnée en série du second demi-pont D2 et relie le second demi pont D2 et le circuit résonant LC. De façon non limitative, les interrupteurs Q1, Q2, Q3 et Q4 peuvent être des transistors, comme représenté en figure 2.

Afin d'effectuer une gestion efficiente des courants transmis à la charge de sortie Rout, la première inductance Lc1 et la deuxième inductance Lc2 possède une même inductance Lc et sont couplées en sens inverse l'une par rapport à l'autre. C'est-à-dire que la première inductance Lc1 est en parallèle de la deuxième inductance Lc2 et que la deuxième inductance Lc2 est traversée par un courant dans le sens inverse par rapport au courant traversant la première inductance Lc1. Nous pouvons donc comprendre que la première inductance Lc1 et la deuxième inductance Lc2 sont réalisées sur le même circuit magnétique, c'est-à-dire que la première inductance Lc1 et la deuxième inductance Lc2 sont traversées par un même flux produit par la somme signée des courants qui traversent la première inductance Lc1 et la deuxième inductance Lc2.

Ainsi, lors d'un fonctionnement à pleine charge, le premier demi-pont D1 est en phase avec le second demi-pont D2 et la première inductance Lc1 et la deuxième inductance Lc2 sont invisibles pour la structure de convertisseur de puissance 100. En effet, les courants sont opposés dans la première inductance Lc1 et la deuxième inductance Lc2, ce qui induit que le flux produit au niveau de la première inductance Lc1 et la deuxième inductance Lc2 est nul et donc que la première inductance Lc1 et la deuxième inductance Lc2 sont invisibles pour la structure du convertisseur de puissance 100.

A l'inverse, lors d'un fonctionnement à faible charge, le premier demi-pont D1 et le second demi-pont D2 fonctionnent en opposition de phase et les courants sont opposés et égaux. Le courant fourni à la charge qui est la somme des courants est nul. Les courants opposés produisent un flux maximal dans la première inductance Lc1 et la deuxième inductance Lc2 et limite le courant qui circule entre le premier demi-pont D1 et le second demi-pont D2. L'amplitude de ce courant est limitée par la valeur de l'inductance, choisie pour assurer de la commutation douce, phénomène présenté ci-après.

Les moyens de contrôle 4 assurent la gestion des deux fonctionnements cités précédemment et permettent un fonctionnement intermédiaire entre les deux types de fonctionnement présentés. Les moyens de contrôle 4 sont configurés pour ajuster la différence de phase entre le premier demi-pont D1 et le second demi-pont D2 pour ajuster la tension de sortie en fonction de la charge et de la tension d'entrée. Les moyens de contrôle 4 peuvent, à titre d'exemple, assurer un fonctionnement intermédiaire basé sur un modèle de gestion linéaire du courant entre les deux types de fonctionnement. Pour ce faire, les moyens de contrôle 4 détectent le courant en sortie de l'onduleur 101 ou la tension de sortie Vout et commandent le premier demi-pont D1 et le second demi-pont D2 de l'onduleur 101 en fonction du courant détecté.

De cette manière, la gestion de la charge de sortie Rout du convertisseur de puissance 100 ne se fait plus à l'aide de la variation de la fréquence et donc en éloignant la fréquence de fonctionnement du convertisseur de puissance 100 vis-à-vis de sa fréquence de résonance mais par la variation du déphasage observé entre les courants traversant le premier demi-pont D1 et le second demi-pont D2 de l'onduleur 101. Le convertisseur de puissance 100, tel que présenté, fonctionne alors pour tous les cas éventuels à la fréquence de résonance ou à proximité de la fréquence de résonance, fréquences qui assurent un fonctionnement efficient.

Un autre inconvénient de l'état de l'art présenté en figure 1 est la gestion des pertes. En effet, avec l'augmentation de la fréquence de fonctionnement des alimentations et l'éloignement du fonctionnement à proximité de la fréquence de résonnance, une partie du courant qui circule dans le circuit résonant n'est pas transmis à la charge et créé de la puissance réactive. Or, plus le fonctionnement est éloigné de la fréquence de résonnance, plus les pertes dans les interrupteurs et surtout dans les éléments magnétiques, augmentent.

A l'inverse de la commutation dure, lorsque le courant ou la tension dans l'interrupteur est nul ou que ces deux composantes sont opposées, la puissance dans l'interrupteur est nulle. Cette situation présente l'avantage de ne générer qu'une quantité faible de perte par commutation dans l'interrupteur, du fait de l'absence de puissance à dissiper. L'énergie emmagasinée dans les capacités parasites des interrupteurs circule alors, permettant la mise en conduction sans perte de ceux-ci on parle de « soft switching » ou commutation douce. A l'inverse, lorsque le courant et la tension dans un interrupteur sont non nuls, une puissance est dissipée dans l'interrupteur. On parle alors de commutation dure ou « hard-switching ».

Lorsque la tension est nulle lors d'une commutation, l'homme du métier parle de « commutation à zéro de tension » (ZVS), et identiquement « commutation à zéro de courant » lorsque le courant est nul (ZCS). Généralement, ce phénomène est appelé commutation douce ou « soft switching ».

La structure de convertisseur de puissance 100, présentée en figure 2, selon l'invention présente des avantages vis-à-vis de la commutation douce. En effet, les moyens de contrôle 4 de l'onduleur 101 sont configurés pour retarder le courant par rapport à la tension, de manière à obtenir une commutation douce.

Par extension avec ce qui a été dit précédemment, grâce à la structure de convertisseur de puissance 100 selon l'invention, il est possible de travailler en commutation douce sur toute la plage de charge de l'alimentation. Ceci est un avantage, d'une part pour limiter les pertes dans les interrupteurs Q1, Q2, Q3 et Q4, ce qui induit donc d'améliorer le rendement, et d'autre part, limiter les perturbations électromagnétiques et électriques induites par l'alimentation. De cette manière, l'invention permet de réduire la taille des filtres implantés dans le convertisseur de puissance 100.

En outre, chaque interrupteur Q1, Q2, Q3 et Q4 peut présenter une diode (Di1 pour Q1, Di2 pour Q2, Di3 pour Q3 et Di4 pour Q4) en antiparallèle à l'interrupteur et peut présenter une capacité (C1 pour Q1, C2 pour Q2, C3 pour Q3 et C4 pour Q4), en parallèle. Ces capacités C1, C2, C3 et C4 peuvent être la capacité parasite de l'interrupteur ou être celles d'un condensateur ajouté comme montré sur la figure 2. De cette manière, le convertisseur de puissance 100 peut fonctionner en commutation douce (ZVS) et même à vide.

De plus, le convertisseur de puissance 100 peut être équipé de deux transistors D5 et D6, en parallèle du circuit redresseur secondaire 3, entre le circuit redresseur secondaire 3 et la charge de sortie Rout.

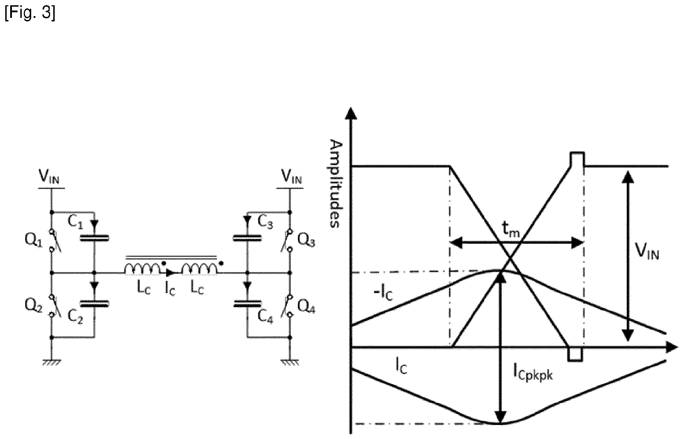

La figure 3 présente d'autres avantages de la structure de convertisseur de puissance 100. La figure 3 représente schématiquement l'onduleur 101 de la structure du convertisseur de puissance 100 selon l'invention dans le cas d'un fonctionnement à vide où les courants sont opposés dans la première inductance Lc1 et la deuxième inductance Lc2. Plus précisément, la figure 3 présente le premier demi-pont D1, composé des interrupteurs Q1 et Q2 reliés en série à la première inductance Lc1, en parallèle du second demi-pont D2, composé des interrupteurs Q3 et Q4 reliés en série à la deuxième inductance Lc2.

De cette manière, un courant $Ic$ est mesurable, entre la première inductance Lc1 et la deuxième inductance Lc2. Le courant $Ic$ est directement lié à la valeur de la première inductance Lc1, à la valeur de la deuxième inductance Lc2 et à la tension d'entrée $Vin$ à travers l'équation suivante :

$$I_C = \frac{V_{in}}{8L_C f_{dec}}$$

où $Lc$ est la valeur de la première inductance Lc1 et de la deuxième inductance Lc2, $Vin$ est la valeur de la tension d'entrée et $fdec$ est la fréquence d'utilisation du convertisseur de puissance 100 ou fréquence de découpage.

Cette formule est valable lors du fonctionnement à vide, lorsque les courants sont en opposition de phase dans les première et deuxième inductances Lc1 Lc2 couplées telle qu'illustrée par la figure 3.

De plus, le courant $Ic$ étant dépendant de la valeur de la première inductance Lc1 et de la valeur de la deuxième inductance Lc2, il peut être compris dans une plage de courant $I_{cpkpk}$. La plage de courant $I_{cpkpk}$ s'étend autour de la valeur normée du courant $Ic$ en fonction du fonctionnement du convertisseur de puissance 100.

Un autre avantage de la structure du convertisseur de puissance 100 selon l'invention est la gestion d'un temps mort $tm$ qui est le temps nécessaire à la mise en place d'une commutation douce. Plus précisément, le temps mort $tm$ est défini comme le temps minimum permettant la décharge des capacités C1, C2, C3 et C4 et le ré-enclenchement des interrupteurs Q1, Q2, Q3 et Q4. En effet, le convertisseur de puissance 100 selon l'invention permet de rendre le temps mort $tm$ indépendant de la tension d'entrée $Vin$ ce qui simplifie la commande des interrupteurs Q1, Q2, Q3 et Q4. Ainsi, le temps mort $tm$ peut être défini pour tous les fonctionnements en fonction des capacités de sorties $C_{OSS}$ des interrupteurs Q1, Q2, Q3 et Q4 comme :

$$t_m = 16L_C C_{OSS} f_{dec}$$

Le temps mort peut être interprété comme le temps maximum qui peut être fixé grâce au fonctionnement à faible charge ou à vide. Il est possible de le diminuer lors d'un fonctionnement à forte charge.

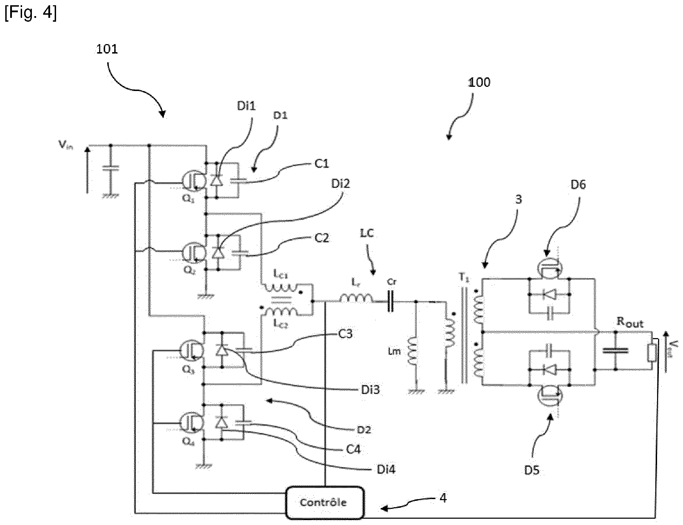

La figure 4 représente schématiquement une variante de la structure de convertisseur de puissance 100. Comme présenté en figure 2, le convertisseur de puissance 100 comporte :

- un onduleur 101, assuré par les quatre interrupteurs Q1, Q2, Q3 et Q4, les interrupteurs Q1 et Q2 formant le premier demi-pont D1 et les interrupteurs Q3 et Q4 formant le second demi-pont D2, capable de hacher une tension d'entrée $Vin$ et ainsi de générer un signal carré,

- un circuit résonant série relié à l'onduleur 101,

- un transformateur T1 comprenant un circuit primaire 2 avec un enroulement de N1 spires et un circuit redresseur secondaire 3 avec un enroulement de N2 et N3 spires, qui permet de réaliser la fonction isolation galvanique,

- et des moyens 4 de contrôle de l'onduleur 101.

Cette variante de la structure du convertisseur de puissance 100 ajoute une inductance Lm en parallèle du transformateur T1, ce qui permet de dissocier deux résonances. L'utilisation de l'inductance Lm en parallèle du transformateur T1 permet de réduire l'inductance magnétique générée au niveau du transformateur T1. Le circuit résonant série devient alors un circuit LLC avec deux inductances Lr et Lm et un condensateur Cr.

Les premières et deuxièmes inductances Lc1 Lc2 couplées permettent de limiter le courant échangé entre le premier demi-pont D1 et le second demi-pont D2 lorsqu'ils sont en opposition de phase et d'additionner les courants sans impacter le convertisseur de puissance lorsqu'ils sont en phase.

De manière avantageuse, le fonctionnement de l'alimentation se fait à proximité de la fréquence de résonnance.

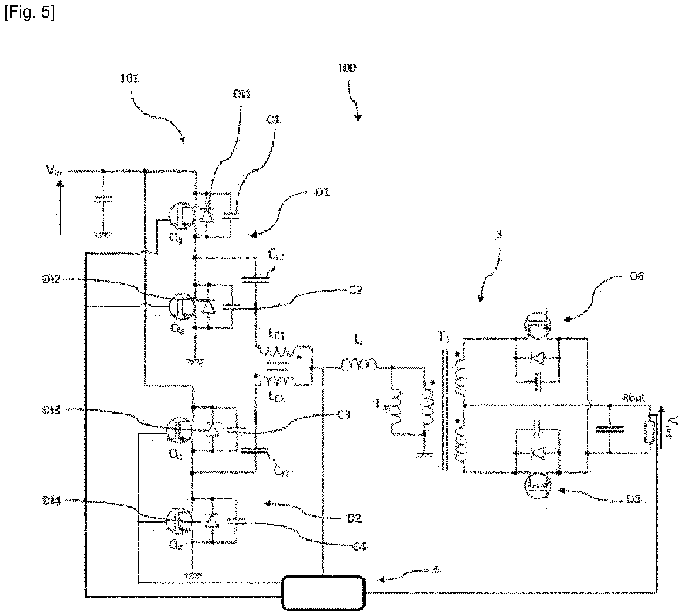

Le condensateur Cr du circuit résonant série peut être séparée en une première capacité secondaire Cr1 et une deuxième capacité secondaire Cr2, comme représenté en figure 5, valant chacune la moitié de la capacité initiale du condensateur Cr. La première capacité secondaire Cr1 est placée entre le premier demi-pont D1 et la première inductance Lc1 et, de la même manière, la deuxième capacité secondaire Cr2 est placée entre le deuxième demi-pont D2 et la deuxième inductance Lc2. Cette configuration rend le système insensible aux dissymétries sur la commande.

**Revendications**

1. Convertisseur de puissance (100) à circuit résonant parallèle comportant :

   - Un onduleur (101),
   - Un circuit résonant (LC),
   - Un transformateur (T1) comprenant un circuit primaire (2) et un circuit secondaire (3),
   - Des moyens de contrôle (4) de l'onduleur (101), l'onduleur (101) étant relié au circuit résonant (LC) qui est destiné à être connecté à une charge de sortie (Rout) à travers le transformateur (T1),

   **caractérisé en ce que** le convertisseur de puissance (100) comprend une inductance Lm en parallèle du transformateur (T1) et **en ce que** l'onduleur (101) comprend :

   - un premier demi-pont (D1) et un second demi-pont (D2) en parallèle du premier demi-pont (D1),
   - une première inductance (Lc1) entre le premier demi-pont (D1) et le circuit résonant (LC),
   - une deuxième inductance (Lc2) entre le second demi-pont (D2) et le circuit résonant (LC),

   et **en ce que** les première et deuxième inductances (Lc1, Lc2) ont la même inductance et sont couplées en sens inverse l'une par rapport à l'autre.

2. Convertisseur de puissance (100) selon la revendication 1, dans lequel le second demi-pont (D2) est en opposition de phase du premier demi-pont (D1) pour un fonctionnement à faible charge et dans lequel un courant Ic traversant les première et deuxième inductances (Lc1, Lc2) est tel que :

$$I_C = \frac{V_{in}}{8 L_C f_{dec}}$$

Où Vin est la tension d'entrée aux bornes du premier demi-pont (D1) et du second demi-pont (D2), Lc est l'inductance des première et deuxième inductances (Lc1, Lc2) et fdec est une fréquence de découpage du circuit résonant (LC), pour un fonctionnement à faible charge.

3. Convertisseur de puissance (100) selon la revendication 2, dans lequel le premier demi-pont (D1) comprend un premier interrupteur (Q1) et un deuxième interrupteur (Q2), le second demi-pont (D2) comprend un troisième interrupteur (Q3) et un quatrième interrupteur (Q4), le premier demi-pont (D1) et le second demi-pont (D2) étant configurés pour être traversés par un courant et générant une tension et les moyens de contrôle (4) du premier demi-pont (D1) et du second demi-pont (D2) sont configurés pour retarder le courant par rapport à la tension, de manière à obtenir une commutation douce (ZVS).

4. Convertisseur de puissance (100) selon la revendication 3, dans lequel le premier interrupteur (Q1) comporte un premier condensateur de capacité C1, le deuxième interrupteur (Q2) comporte un deuxième condensateur de capacité C2, le troisième interrupteur (Q3) comporte un troisième condensateur de capacité C3, le quatrième interrupteur (Q4) comporte un quatrième condensateur de capacité C4 et dans lequel un temps mort tm défini comme le temps de décharge des premier condensateur de capacité C1, deuxième condensateur de capacité C2, troisième condensateur de capacité C3, quatrième condensateur de capacité C4 et de ré-enclenchement des premier interrupteur (Q1), deuxième interrupteur (Q2), troisième interrupteur (Q3) et quatrième interrupteur (Q4) est tel que :

$$t_m = 16 L_C C_{OSS} f_{dec}$$

où COSS est la capacité de sortie des premier, deuxième, troisième et quatrième interrupteurs (Q1, Q2, Q3, Q4).

5. Convertisseur de puissance (100) selon la revendication 1, dans lequel le second demi-pont (D2) est en phase du premier demi-pont (D1) pour un fonctionnement à pleine charge.

[Fig. 1]

[Fig. 2]

[Fig. 3]

[Fig. 4]

[Fig. 5]

# EP 3 926 809 A1

**Europäisches Patentamt**
**European Patent Office**
**Office européen des brevets**

## RAPPORT DE RECHERCHE EUROPEENNE

Numéro de la demande

EP 21 17 7462

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | CN 107 241 020 A (HANGZHOU ZHONGHENG ELECTRIC CO LTD) 10 octobre 2017 (2017-10-10) * figures 2-4 * * alinéa [0041] - alinéa [0045] * ----- | 1-5 | INV. H02M3/335 H02M3/337 H02M1/00 H02M3/00 H02M3/158 |
| Y | US 6 246 599 B1 (JANG YUNGTAEK [US] ET AL) 12 juin 2001 (2001-06-12) * figure 3 * * abrégé * * colonne 1, ligne 27 - ligne 43 * * colonne 3, ligne 25 - ligne 50 * ----- | 1-5 | |
| A | US 6 392 902 B1 (JANG YUNGTAEK [US] ET AL) 21 mai 2002 (2002-05-21) * figure 4 * * colonne 5, ligne 23 - ligne 41 * ----- | 1-5 | |
| Y | . .: "AN-4151 Half-Bridge LLC Resonant Converter Design Using FSFR-Series Fairchild Power Switch (FPS(TM))", , 22 octobre 2014 (2014-10-22), pages 1-18, XP055847071, Extrait de l'Internet: URL:https://s1.dtsheet.com/store/data/0013 60852.pdf?key=e76d7fac9933d24bd61dd103e1a5 6839&r=1 [extrait le 2021-10-04] * figure 2 * * page 1 * ----- | 1-5 | **DOMAINES TECHNIQUES RECHERCHES (IPC)** H02M |

Le présent rapport a été établi pour toutes les revendications

| Lieu de la recherche | Date d'achèvement de la recherche | Examinateur |
|---|---|---|
| La Haye | 4 octobre 2021 | Riehl, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................
& : membre de la même famille, document correspondant

EPO FORM 1503 03.82 (P04C02)

13

## ANNEXE AU RAPPORT DE RECHERCHE EUROPEENNE
## RELATIF A LA DEMANDE DE BREVET EUROPEEN NO.

EP 21 17 7462

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-10-2021

| Document brevet cité au rapport de recherche | | Date de publication | Membre(s) de la famille de brevet(s) | | Date de publication |
|---|---|---|---|---|---|
| CN 107241020 | A | 10-10-2017 | AUCUN | | |
| US 6246599 | B1 | 12-06-2001 | AUCUN | | |
| US 6392902 | B1 | 21-05-2002 | CN | 1365180 A | 21-08-2002 |
| | | | US | 6392902 B1 | 21-05-2002 |
| | | | US | 2002044461 A1 | 18-04-2002 |

EPO FORM P0460

Pour tout renseignement concernant cette annexe : voir Journal Officiel de l'Office européen des brevets, No.12/82